# FASCICULE DE BREVET EUROPEEN

(11) **EP 3 664 238 B1**
(45) Date de publication et mention de la délivrance du brevet: **12.06.2024**
(21) Numéro de dépôt: 19213594.5
(22) Date de dépôt: 04.12.2019
(51) Int. Cl.: H02G 3/14, H05K 5/03

(54) **BOITIER DE CONNEXION**
ANSCHLUSSBOX
CONNECTION UNIT

(30) Priorité: 06.12.2018 FR 1872421
(43) Date de publication de la demande: 10.06.2020
(73) Titulaire: Nexans, 92400 Courbevoie (FR)
(72) Inventeur: MIART, Freddy, 08000 CHARLEVILLE-MEZIERES (FR); JEAN, Jérémy, 08350 BOSSEVAL ET BRIANCOURT (FR)
(74) Mandataire: Ipsilon

(56) Documents cités:
- FR-A1- 2 665 328
- US-A1- 2010 095 488

## Description

La présente invention se rapporte à un boîtier de connexion.

L'invention appartient au domaine des boîtiers de connexion, utilisés, à titre d'exemple non limitatif, à l'extérieur de bâtiments ou autres installations.

Dans certains cas, comme par exemple lorsqu'un boîtier de connexion est installé sur la voie publique, il convient de pouvoir verrouiller la fermeture du boîtier, pour interdire l'accès à l'intérieur du boîtier. Un boîtier connu est divulgué dans FR 2 665 328 A1.

Les systèmes classiques de verrouillage de boîtiers, du type serrures-triangle ou à clés, passent généralement au travers de la paroi extérieure du capot du boîtier. Ce type de montage présente plusieurs inconvénients.

D'une part, l'encombrement de ces systèmes, nécessité par le mouvement de verrouillage, n'est pas compatible avec les fortes contraintes de restriction de volume dues au peu de place disponible à l'intérieur du boîtier.

En outre, ces systèmes sont coûteux, non optionnels, doivent être montés avant l'installation du boîtier sur le site prévu et peuvent causer des défauts d'étanchéité du boîtier au niveau de l'interface entre le capot du boîtier et le système de verrouillage.

La présente invention a pour but de remédier aux inconvénients précités de l'art antérieur.

Dans ce but, la présente invention propose un boîtier de connexion comportant un corps et un capot disposé sur ce corps, remarquable en ce qu'il comporte en outre un loquet de fermeture assemblé avec le capot et, lorsque le boîtier de connexion est fermé, avec le corps et présentant un orifice logeant une serrure. Un boîtier selon l'invention est défini dans la revendication 1. Les modes de réalisation préférés de l'invention sont définis dans les revendications dépendantes 2 à 6.

Ainsi, ce boîtier propose un système de verrouillage optionnel, qui peut être installé de façon simple, économique et sans outil en logeant la serrure dans l'orifice précité du loquet de fermeture. Cette opération peut être réalisée sur site. Lorsque le boîtier n'a pas besoin d'être verrouillé, il suffit de loger un bouchon au lieu de la serrure dans le même orifice du loquet.

En outre, la serrure est entièrement située à l'extérieur du boîtier puisqu'elle vient s'intégrer au loquet de fermeture. Ce système de verrouillage a donc également pour avantages de représenter un encombrement nul à l'intérieur du boîtier, c'est-à-dire de conserver tout le volume utile à l'intérieur du boîtier et de ne pas compromettre l'étanchéité du boîtier, sans pour autant nécessiter l'ajout d'un joint d'étanchéité tel qu'un joint élastomère.

Selon l'invention, la paroi extérieure du capot est pourvue d'au moins une glissière de guidage dans laquelle le loquet de fermeture est adapté à coulisser.

La glissière, qui peut par exemple être moulée sur la paroi extérieure du capot, constitue un moyen simple, économique et peu encombrant de guidage du loquet lors de la fermeture ou de l'ouverture du boîtier.

Dans un mode particulier de réalisation, la paroi extérieure du capot est par exemple pourvue d'une glissière de guidage centrale et de deux glissières de guidage latérales disposées de part et d'autre de la glissière de guidage centrale.

La répartition de trois glissières sur la longueur du capot permet un guidage optimal du loquet.

Selon l'invention, le corps comporte au moins une anse et le loquet de fermeture comporte au moins un doigt qui, lorsque le boîtier de connexion est fermé, traverse cette anse.

Cela permet d'assembler de façon simple le loquet au corps du boîtier, sans prévoir de pièces additionnelles d'assemblage.

Selon l'invention, l'orifice précité du loquet loge une serrure coopérant avec un élément de verrouillage prévu sur la paroi extérieure du capot de façon à verrouiller la fermeture du boîtier.

La serrure et l'élément de verrouillage étant situés à l'extérieur du boîtier, tout le volume utile à l'intérieur du boîtier est préservé.

Dans ce mode de réalisation, selon des caractéristiques particulières possibles, l'orifice est circulaire et la serrure est un cylindre dont la base est fermée, la base présentant un premier rebord sur une partie du pourtour du cylindre, le bord de l'orifice étant doté d'une patte d'accrochage et le premier rebord étant en appui sur la patte d'accrochage.

Cela permet de maintenir de façon simple la serrure dans l'orifice, sans pièce d'assemblage additionnelle et la serrure est par ailleurs mobile en rotation dans l'orifice.

Dans ce mode de réalisation, selon une caractéristique particulière possible, la base du cylindre de la serrure comporte à l'intérieur du cylindre une protubérance de forme géométrique prédéterminée.

Cela permet d'actionner la serrure en rotation, au moyen d'une clé présentant une forme géométrique complémentaire de la forme de la protubérance.

Dans ce mode de réalisation, selon une caractéristique particulière possible, la base du cylindre de la serrure comporte une butée sous le cylindre, la butée étant en contact avec l'élément de verrouillage précité lorsque la fermeture du boîtier est verrouillée par rotation d'un quart de tour de la serrure.

La butée portée par la serrure et l'élément de verrouillage porté par le capot coopèrent ainsi de façon simple pour verrouiller la fermeture du boîtier et ce, de façon réversible, puisqu'il suffit d'actionner la serrure en rotation inverse au moyen de la clé précitée pour déverrouiller la fermeture.

Selon un autre aspect qui ne relève pas de l'invention et qui n'est présenté qu'à titre illustratif, l'orifice du loquet de fermeture loge un bouchon présentant un second rebord sur une partie de son pourtour, le bord de l'orifice étant doté d'une patte d'accrochage et le second rebord étant en appui sur la patte d'accrochage.

Ainsi, lorsqu'il n'est pas nécessaire de verrouiller la fermeture du boîtier, l'orifice est simplement fermé par un bouchon qui est maintenu dans cet orifice par la coopération entre le rebord du bouchon et la patte d'accrochage, sans pièce d'assemblage additionnelle.

### Brève description des dessins

D'autres aspects et avantages de l'invention apparaîtront à la lecture de la description détaillée ci-après de modes particuliers de réalisation, donnés à titre d'exemples nullement limitatifs, en référence aux dessins annexés, dans lesquels :
la figure 1 est une représentation schématique d'un boîtier de connexion conforme à la présente invention, dans un premier mode particulier de réalisation ;
la figure 2 est une représentation schématique en vue éclatée d'un boîtier de connexion conforme à la présente invention, dans le premier mode de réalisation ;
la figure 3 est une représentation schématique en vue éclatée d'un boîtier de connexion selon un mode de réalisation qui ne relève pas de l'invention et qui n'est présenté qu'à titre illustratif;
la figure 4 est une représentation schématique en vue de dessous d'une serrure et d'une partie d'un loquet de fermeture faisant partie d'un boîtier de connexion conforme à la présente invention, dans le premier mode de réalisation ;
la figure 5 est une vue schématique montrant par transparence le loquet de fermeture et la serrure en position déverrouillée, dans le premier mode de réalisation ;
la figure 6 est une vue schématique montrant par transparence le loquet de fermeture et la serrure en position verrouillée, dans le premier mode de réalisation ; et
la figure 7 est une représentation schématique en vue de dessous d'un bouchon et d'une partie d'un loquet de fermeture faisant partie d'un boîtier de connexion selon le mode de réalisation qui ne relève pas de l'invention et qui n'est présenté qu'à titre illustratif.

### Description de mode(s) de réalisation

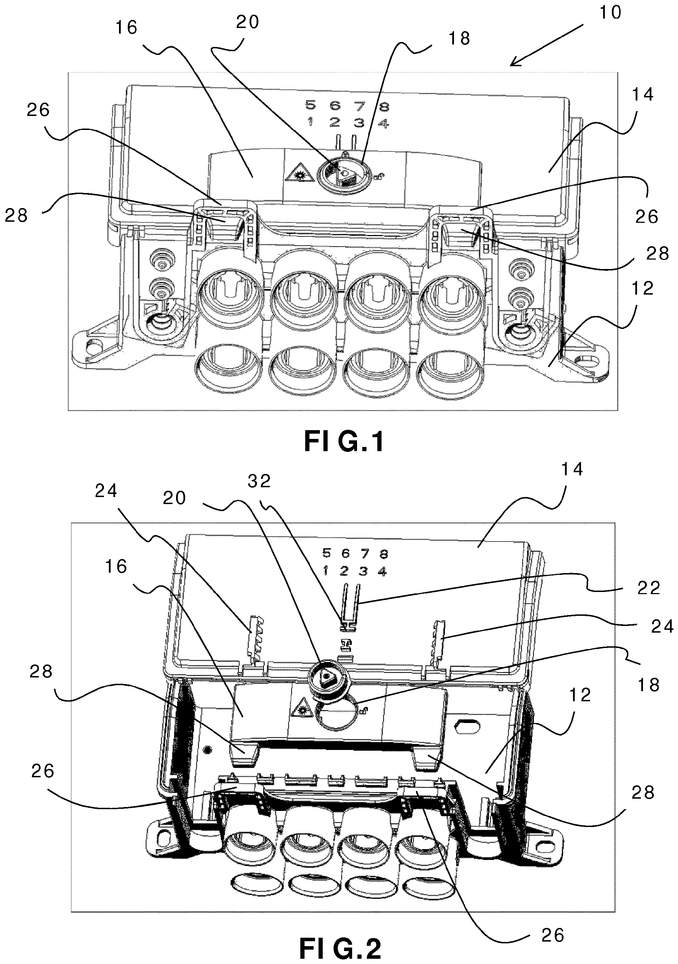

La figure 1 montre un premier mode particulier de réalisation d'un boîtier 10 de connexion conforme à la présente invention.

Le boîtier 10 de connexion comporte un corps 12 et un capot 14 disposé sur le corps 12. Le capot 14 ne présente aucune ouverture qui permettrait d'accéder à l'intérieur du boîtier 10 de connexion.

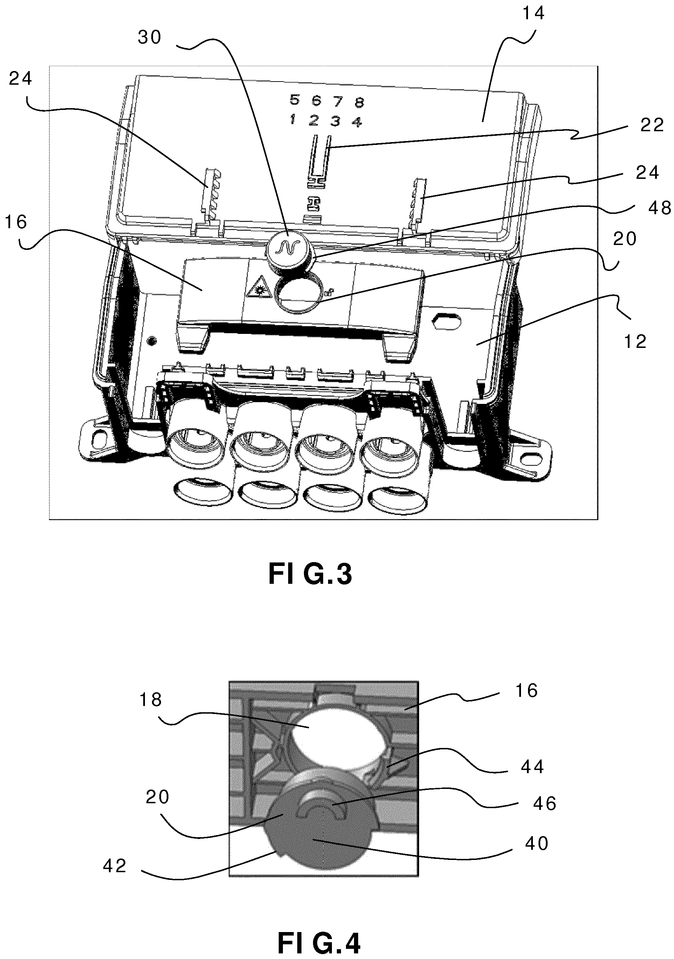

Conformément à la présente invention, le boîtier 10 de connexion comporte en outre un loquet 16 de fermeture assemblé avec le capot 14. Lorsque le boîtier 10 de connexion est fermé, le loquet 16 de fermeture est également assemblé avec le corps 12. Le loquet 16 de fermeture présente un orifice 18 adapté à loger, soit une serrure 20 comme dans le premier mode particulier de réalisation illustré par les figures 1 et 2, soit un bouchon 30 comme dans un second mode particulier de réalisation illustré par la figure 3.

L'assemblage du loquet 16 de fermeture avec le corps 12 du boîtier 10 de connexion est réalisé au moyen d'au moins une anse 26 prévue sur le corps 12 et d'au moins un doigt 28 prévu sur le loquet 16 de fermeture. Lorsque le boîtier 10 de connexion est fermé, le ou les doigts 28 traverse(nt) respectivement la ou les anses 26. Dans le mode de réalisation illustré, le loquet 16 de fermeture comporte deux doigts 28 et le corps 12 comporte deux anses 26, chaque doigt 28 traversant une anse 26.

La figure 2 montre plus précisément comment le loquet 16 de fermeture est assemblé avec le capot 14.

L'assemblage du loquet 16 de fermeture avec le capot 14 est réalisé au moyen d'une ou plusieurs glissières de guidage dont est pourvue la paroi extérieure du capot 14. A titre d'exemple non limitatif, la ou les glissières de guidage peuvent être moulées sur la paroi extérieure du capot 14.

Dans le mode particulier de réalisation illustré, la paroi extérieure du capot 14 est pourvue d'une glissière 22 de guidage centrale et de deux glissières 24 de guidage latérales disposées de part et d'autre de la glissière 22 de guidage centrale. Le loquet 16 de fermeture est adapté à coulisser dans les glissières 22 et 24 par l'intermédiaire de formes complémentaires aux formes des glissières, ces formes complémentaires étant prévues sur la paroi inférieure (non visible sur les dessins) du loquet 16 de fermeture.

Dans le premier mode de réalisation des figures 1 et 2, conformément à l'invention, l'orifice 18 du loquet 16 de fermeture loge une serrure 20.

La serrure 20 coopère avec un élément 32 de verrouillage (visible sur la figure 2) prévu sur la paroi extérieure du capot 14, de façon à verrouiller la fermeture du boîtier 10 de connexion. A titre d'exemple non limitatif, l'élément 32 de verrouillage peut être un prolongement en forme de T de la glissière 22 de guidage centrale. Le mécanisme de verrouillage est décrit plus en détail ci-après en lien avec les figures 4 à 6.

Comme le montre la figure 4, l'orifice 18 est par exemple circulaire et la serrure 20 est par exemple un cylindre dont la base 40 est fermée.

En outre, la base 40 présente un premier rebord 42 sur une partie du pourtour du cylindre. Lorsque la serrure 20 est logée dans l'orifice 18, le premier rebord 42 est en appui sur une patte 44 d'accrochage prévue sur le bord de l'orifice 18, la patte 44 d'accrochage faisant saillie par rapport à la paroi inférieure du loquet 16 de fermeture.

Par ailleurs, la base 40 comporte à l'intérieur du cylindre une protubérance (visible sur les figures 1 et 2) ayant une forme géométrique prédéterminée. Cette protubérance sert de prise pour une clé d'actionnement de la serrure 20.

Comme le montrent les figures 1 et 2, cette forme peut par exemple être triangulaire. En variante, cette forme peut tout aussi bien être carrée ou en croix ou avoir une autre forme jugée appropriée, sous réserve que cette forme soit complémentaire d'une forme portée par la clé d'actionnement de la serrure 20.

Comme le montre la figure 4, la base 40 comporte également une butée 46 située sous le cylindre. La butée 46 est par exemple moulée sur la base 40.

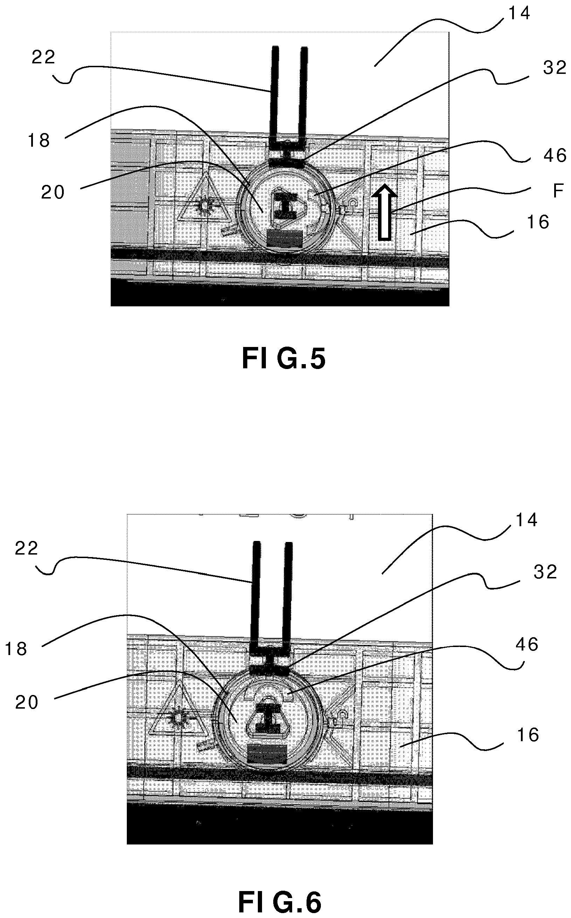

La butée 46 coopère avec l'élément 32 de verrouillage porté par la paroi extérieure du capot 14 pour verrouiller la fermeture du boîtier 10 de connexion, comme le montrent les figures 5 et 6. A titre d'exemple nullement limitatif, la butée 46 peut avoir la forme d'une demi-lune comme illustré.

La figure 5 montre la position déverrouillée. La butée 46 se trouve à droite de l'élément 32 de verrouillage du capot 14, permettant ainsi le mouvement du loquet 16 de fermeture en translation dans le sens de la flèche F. Ce mouvement libère les doigts 28 du loquet 16 de fermeture hors des anses 26 du corps 12 et autorise l'ouverture du capot 14.

La figure 6 montre la position verrouillée. La serrure 20 a effectué une rotation d'un quart de tour antihoraire (en vue de dessous), par l'intermédiaire de l'actionnement d'une clé de forme complémentaire à la forme de la protubérance précitée. Cela place la butée 46 en contact avec l'élément 32 de verrouillage. Le mouvement de translation du loquet 16 de fermeture est alors impossible, ce qui verrouille la fermeture du loquet 16 sur le capot 14.

Dans le second mode particulier de réalisation illustré par la figure 3, qui ne relève pas de l'invention et qui n'est présenté qu'à titre illustratif, où la fermeture du boîtier 10 de connexion n'a pas besoin d'être verrouillée, tous les éléments constitutifs du boîtier 10 de connexion sont identiques à ceux du premier mode particulier de réalisation et ne sont donc pas décrits à nouveau ici, à l'exception de la serrure 20 qui est remplacée par le bouchon 30.

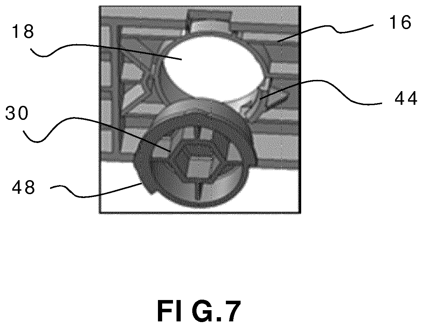

Les figures 3 et 7 montrent que le bouchon 30 est par exemple un cylindre. On voit sur la figure 3 que le sommet du cylindre est fermé. On voit sur les figures 3 et 7 que la base du cylindre présente un second rebord 48 sur une partie du pourtour du cylindre. Lorsque le bouchon 30 est logé dans l'orifice 18, le second rebord 48 est en appui sur une patte 44 d'accrochage prévue sur le bord de l'orifice 18, la patte 44 d'accrochage, identique à celle du premier mode de réalisation, faisant saillie par rapport à la paroi inférieure du loquet 16 de fermeture.

## Revendications

1. Boîtier (10) de connexion comportant un corps (12) et un capot (14) disposé sur ledit corps (12), ledit boîtier comportant en outre un loquet (16) de fermeture assemblé avec ledit capot (14) et, lorsque ledit boîtier (10) de connexion est fermé, avec ledit corps (12) et présentant un orifice (18) logeant une serrure (20), et selon lequel une paroi extérieure dudit capot (14) est pourvue d'au moins une glissière (22, 24) de guidage dans laquelle ledit loquet (16) de fermeture est adapté à coulisser, et **caractérisé en ce que** ledit corps (12) comporte au moins une anse (26) et ledit loquet (16) de fermeture comporte au moins un doigt (28) qui, lorsque ledit boîtier (10) est fermé, traverse ladite au moins une anse (26), et **en ce que** la serrure (20) coopère avec un élément (32) de verrouillage prévu sur la paroi extérieure dudit capot (14) pour empêcher le coulissement du loquet (16) de fermeture de façon à verrouiller la fermeture dudit boîtier (10) lorsque ledit boîtier (10) est fermé.

2. Boîtier (10) de connexion selon la revendication 1, **caractérisé en ce que** la paroi extérieure dudit capot (14) est pourvue d'une glissière (22) de guidage centrale et de deux glissières (24) de guidage latérales disposées de part et d'autre de ladite glissière (22) de guidage centrale.

3. Boîtier de (10) connexion selon la revendication 2, **caractérisé en ce que** ladite au moins une glissière (22, 24) de guidage est moulée sur la paroi extérieure dudit capot (14).

4. Boîtier (10) de connexion selon la revendication 1, **caractérisé en ce que** ledit orifice (18) est circulaire et ladite serrure (20) est un cylindre dont la base (40) est fermée, ladite base (40) présentant un premier rebord (42) sur une partie du pourtour dudit cylindre, le bord dudit orifice (18) étant doté d'une patte (44) d'accrochage et ledit premier rebord (42) étant en appui sur ladite patte (44) d'accrochage.

5. Boîtier (10) de connexion selon la revendication 4, **caractérisé en ce que** ladite base (40) comporte à l'intérieur dudit cylindre une protubérance de forme géométrique prédéterminée.

6. Boîtier (10) de connexion selon la revendication 4ou 5, **caractérisé en ce que** ladite base comporte une butée (46) sous le cylindre, ladite butée (46) étant en contact avec ledit élément (32) de verrouillage lorsque la fermeture dudit boîtier (10) est verrouillée par rotation d'un quart de tour de ladite serrure (20).

## Patentansprüche

1. Anschlussbox (10), umfassend einen Körper (12) und eine Abdeckung (14), die auf dem Körper (12) angeordnet ist, wobei die Box außerdem einen Verschlussriegel (16) umfasst, der mit der Abdeckung (14) und, wenn die Anschlussbox (10) geschlossen ist, mit dem Körper (12) montiert ist und eine Öffnung (18) aufweist, die ein Schloss (20) aufnimmt, und gemäß dem eine äußere Wand der Abdeckung (14) mit mindestens einer Gleitführung (22, 24) versehen ist, in der der Verschlussriegel (16) ausgelegt ist, um zu gleiten, und **dadurch gekennzeichnet, dass** der Körper (12) mindestens einen Henkel (26) umfasst und der Verschlussriegel (16) mindestens einen Stift (28) umfasst, der, wenn die Box (10) geschlossen ist, den mindestens einen Henkel (26) quert, und dadurch, dass das Schloss (20) mit einem Verriegelungselement (32) zusammenarbeitet, das auf der äußeren Wand der Abdeckung (14) vorgesehen ist, um das Gleiten des Verschlussriegels (16) zu verhindern, um den Verschluss der Box (10) zu verriegeln, wenn die Box (10) geschlossen ist.

2. Anschlussbox (10) nach Anspruch 1, **dadurch gekennzeichnet, dass** die äußere Wand der Abdeckung (14) mit einer zentralen Gleitführung (22) und zwei seitlichen Gleitführungen (24) versehen ist, die auf beiden Seiten der zentralen Gleitführung (22) angeordnet sind.

3. Anschlussbox (10) nach Anspruch 2, **dadurch gekennzeichnet, dass** die mindestens eine Gleitführung (22, 24) auf der äußeren Wand der Abdeckung (14) geformt ist.

4. Anschlussbox (10) nach Anspruch 1, **dadurch gekennzeichnet, dass** die Öffnung (18) rund ist und das Schloss (20) ein Zylinder ist, dessen Basis (40) geschlossen ist, wobei die Basis (40) einen ersten Flansch (42) auf einem Teil des Umfangs des Zylinders aufweist, wobei der Rand der Öffnung (18) mit einer Befestigungsklammer (44) versehen ist und der erste Flansch (42) auf der Befestigungsklammer (44) aufliegt.

5. Anschlussbox (10) nach Anspruch 4, **dadurch gekennzeichnet, dass** die Basis (40) im Inneren des Zylinders einen Vorsprung mit einer vorbestimmten geometrischen Form aufweist.

6. Anschlussbox (10) nach Anspruch 4 oder 5, **dadurch gekennzeichnet, dass** die Basis einen Anschlag (46) unter dem Zylinder umfasst, wobei der Anschlag (46) in Kontakt mit dem Verriegelungselement (32) ist, wenn der Verschluss der Box (10) durch Drehen um eine Vierteldrehung des Schlosses (20) verriegelt wird.

## Claims

1. A connection box (10) including a body (12) and a cover (14) disposed on said body (12), said box further including a closing latch (16) assembled with said cover (14) and, when said connection box (10) is closed, with said body (12) and having an orifice (18) accommodating a lock (20), and according to which an external wall of said cover (14) is provided with at least one guide slide (22, 24) in which said closing latch (16) is adapted to slide, and **characterized in that** said body (12) includes at least one handle (26) and said closing latch (16) includes at least one finger (28) which, when said housing (10) is closed, passes through said at least one handle (26), and **in that** the lock (20) engages with a locking element (32) provided on the external wall of said cover (14) to prevent the sliding of the closing latch (16) so as to lock the closure of said box (10) when said box (10) is closed.

2. The connection box (10) according to claim 1, **characterized in that** the external wall of said cover (14) is provided with a central guide slide (22) and two lateral guide slides (24) disposed on both sides of said central guide slide (22).

3. The connection box (10) according to claim 2, **characterized in that** said at least one guide slide (22, 24) is molded on the external wall of said cover (14).

4. The connection box (10) according to claim 1, **characterized in that** said orifice (18) is circular and said lock (20) is a cylinder whose base (40) is closed, said base (40) having a first flange (42) on a part of the periphery of said cylinder, the edge of said orifice (18) being provided with a hooking tab (44) and said first flange (42) being in abutment on said hooking tab (44).

5. The connection box (10) according to claim 4, **characterized in that** said base (40) has, inside said cylinder, a protuberance of predetermined geometric shape.

6. The connection box (10) according to claim 4 or 5, **characterized in that** said base includes a stop (46) under the cylinder, said stop (46) being in contact with said locking element (32) when the closing of said box (10) is locked by a quarter-turn rotation of said lock (20).
